(19) **Europäisches Patentamt / European Patent Office / Office européen des brevets**

(11) **EP 1 988 473 B1**

(12) **EUROPEAN PATENT SPECIFICATION**

(45) Date of publication and mention
of the grant of the patent:
**08.02.2012 Bulletin 2012/06**

(51) Int Cl.:
***G06F 17/30*** (2006.01)

(21) Application number: **07009044.4**

(22) Date of filing: **04.05.2007**

(54) **A server with a core using a virtual file system and a method for securely redirecting a persistent storage device operation to a middleware infrastructure**

Server mit einem ein virtuelles Dateisystem verwendenden Kern und Verfahren zum sicheren Umlenken eines Dauerspeichervorgangs zu einer Middleware-Infrastruktur

Serveur avec noyau utilisant un système de fichier virtuel et procédé de redirection sécurisée d'une fonction d'un dispositif de stockage constant vers une infrastructure intergicielle

(84) Designated Contracting States:
**CH DE GB LI**

(43) Date of publication of application:
**05.11.2008 Bulletin 2008/45**

(73) Proprietor: **Hofmeister, Helge**
**68163 Mannheim (DE)**

(72) Inventor: **Hofmeister, Helge**
**68163 Mannheim (DE)**

(74) Representative: **Hössle Patentanwälte**
**Partnerschaft**
**Postfach 10 23 38**
**70019 Stuttgart (DE)**

(56) References cited:
**WO-A-2006/061251      US-A1- 2003 110 188**
**US-A1- 2006 015 529**

- **WELCH B: "A COMPARISON OF THREE DISTRIBUTED FILE SYSTEM ARCHITECTURES: VNODE, SPRITE, AND PLAN 9" COMPUTING SYSTEMS, USENIX ASSOCIATION, BERKELEY, CA, US, vol. 7, no. 2, January 1994 (1994-01), pages 175-199, XP000577569 ISSN: 0895-6340**
- **RAO H C ET AL: "ACCESSING FILES IN AN INTERNET: THE JADE FILE SYSTEM" IEEE TRANSACTIONS ON SOFTWARE ENGINEERING, IEEE SERVICE CENTER, LOS ALAMITOS, CA, US, vol. 19, no. 6, 1 June 1993 (1993-06-01), pages 613-624, XP000394147 ISSN: 0098-5589**
- **HEIDEMANN J S ET AL: "File system development with stackable layers" COMPUTER SCIENCE DEPARTMENT TECHNICAL REPORT, NEW YORK,NY, US, no. CSD-930019, July 1993 (1993-07), pages 1-20, XP002254239**

## Description

### Technical field

This description refers to a server comprising a core using a virtual file system and to a method for securely redirecting a persistent storage device operation to a middleware infrastructure, particularly to a server comprising a core using a virtual file system for securely transmitting data processed by an application system and addressed to a persistent storage device, by redirecting the data to the virtual file system interfacing with the application system, buffering the data and transmitting the data to a middleware using a network device, while the core itself is the only party that can access the buffered data.

### Description of the related art

In information technology data transmission is an elementary feature among network components such as clients and servers within a network system. Therefore, the data are either directly transmitted from a first application system running on a first server to a second application system running on a second server or they are routed through at least one specialized server being referred to as a middleware. Such a middleware de-couples the application systems while ensuring data integrity and preventing incompatibility as a result of different configurations of the network components.

In order to transmit data to another application system (a so-called receiver) running on another network component within the network system, an application system (a so-called sender) requires access to corresponding network devices of the respective server for transmitting data comprising memory internal (local) information. Especially legacy application systems often lack this direct access and the possibility to directly utilize the network device of a network component within the network. Therefore, these systems can not "natively" participate in modern data exchange without additional programs. These legacy application systems usually write and buffer data on local persistent storage devices and utilize specialized transmission programs in order to transfer the locally stored data within the network system.

Due to the storing of data on a persistent storage device, data are both modifiable before transmission and their transmissions are delayed. As storage devices, such as the persistent storage devices, are usually shared between several application systems, users and/or other application systems might modify the buffered data both by purpose or accidentally. Therefore, data integrity is not guaranteed, while data are stored on the local persistent storage devices. As already mentioned such application systems are mostly connected via a network system to other application systems using a specialized transmission program. Such a transmission program frequently reads the data that were written by the application system on the local persistent storage device and writes them to the networking device via an operation-system-level functionality. These processes of reading and writing are called "polls". At a receiver side of the network system the data are accepted by a dedicated program that stores transmitted data back on a local persistent storage device, where the data can be read or modified for example by other application systems. Thus, the widely used approach is to connect such application systems to the network system using the local persistent storage device, a polling network-enabled program and a networking device. For the network transmission several protocols are applied. Anyway, this approach is commonly known as a so-called "file transfer solution" and is exemplary disclosed in the US application US 2003/0110188 A1.

However, the described approach causes two major issues, which are the issues of a modification-before/after-transmission and a delayed data transmission being defined as follows.

Firstly, the modification-before/after-transmission issue describes the problem that the data on the local persistent storage device are modifiable by users or other application systems. This issue applies both at the sender and the receiver side and is eased by using access restrictions and/or encryption of locally stored data. The access restriction approach uses logical groups that users are assigned to. Using such users, programs write data into the corresponding persistent local storage device. However, this approach only shrinks the amount of users being able to modify the data, but does not exclude the possibility to modify data. An alternative to prohibit modification-before/after-transmission is to frequently check for new data on the persistent storage device and to write-protect it and/or encrypt or sign the respective data. It is to be noted that this is always only possible via a separate program. The execution of such a program is always delayed and the protection of respective data can therefore never be of immediate effect and never be complete.

Secondly, the issue of delayed transmission describes the problem that the data are not transmitted directly after being exported out of the application system. This can cause both data consistency issues as well as economical damage by delayed information availability. The delayed transmission issue is caused by the fact that there exists no direct communication between the application system and the polling network enabled program (transmission program) and therefore, the polling network enabled program is repetitively executed in order to check for new data on the persistent storage device. The mean value of the caused delay d is then:

$$d = 0.5 * (1/\text{polling frequency}).$$

One way, which is widely used for minimizing this delayed transmission, is to diminish the delay by increasing the polling frequency. Obviously, as the polling frequency cannot be unboundedly diminished, the delay cannot be zero and the files remain modifiable in between two successional polls.

For minimizing the symptoms, a combination of both concepts is also used, whereby the major issues can not be removed.

A further extension for the described file transfer solution is the use of a so-called network enabled file system (NFS), wherein local operating system drivers expose operation-system-level calls to the application system. Instead of writing the data to a local storage device, the data are stored on a physical storage device on a second network component the corresponding receiving application system runs on or on an intermediate storage server both systems (sender and receiver) have access to. This approach solves the modification-before part of the modification-before/after-transmission problem and also solves the issue of delayed transmission since there is no polling network-enabled program on the sender side of the communication. However, NFS still leaves files and data modifiable wherever they are stored. Thus, they can still be modified after being written to the storage server or the physical storage device of the second network component.

Both the file transfer as well as the network enabled file system solutions can be combined with a network-level encryption in order to prohibit modification of data during their transmission through the network, but they are not capable of eliminating the issue of modification-before/after-transmission. The solutions solely lower the probability of modification and/or limit the number of people that can cause harm. However, whenever crucial data are transmitted, this solution is not acceptable. Therefore, the use of these solutions has to be avoided.

Additionally, there are further issues that complicate the application of the described solutions in large-scaled solution landscapes, such as the non-tractability and no-decoupling of the application systems being defined as follows:

Non-traceability describes the fact that both read and write access to data entries in the local or remote storage device cannot be traced sufficiently. The main cause therefore is that the only authentication mechanism is based on users and that current drivers for storage devices do not allow application specific tracing.

No-decoupling describes the problem that both application systems need to have information about the actual partner application system. This especially refers to the problem of data formats. Also de-coupling is not achieved since both servers and the corresponding application systems need to be available (up and running) in order to allow for data transmission. Especially, in the case of a network enabled file system, outages of the receiving server can cause malfunction in the sending application system. Additionally, a delay-free transmission is hard to achieve. This is due to the fact that the need for a file transfer or network enabled file system arises by a limitation of the sending application system.

## Summary

It is an object to provide a server comprising a virtual file system and a core, and an appropriate method for securely redirecting a persistent storage device operation to a middleware infrastructure. The persistent storage device operation comprises at least a transmission of data resulting from a write operation of an application system running on the server whereby the data is virtually addressed to a persistent storage device. The server further comprises at least one network device and at least one physical non-persistent memory, wherein the server is cooperating with at least one middleware acting as a data storage remotely accessible and the virtual file system is located in the non-persistent memory of the server. The data to be transmitted and which are virtually addressed to the persistent storage device can be redirected to the virtual file system which directs the data to the core for buffering the data in the non-persistent memory so that the data can be transmitted to the middleware using the network device. The non-persistent memory is managed by the core, which is further configured to intercept the data which are to be buffered in the non-persistent memory and to transmit the data to the middleware by using the network device when the buffering is considered to be complete, wherein the transmitted data of the application system (11) running on the server (10) are transmitted via a continuous data transmission stream and buffered in the non-persistent memory by the core (16) using the virtual file system (13) until data transmission is flushed and data are transmitted by the core (16) to the middleware (18) using a discrete function call, wherein the core is configured to declare the continuously transmitted data originating from the application system to be flushed, if no new data is appended to that data in a certain time period, and the data cannot be modified during the buffering of the data, because the core itself is the only component that can access the buffered data prior to its transmission to the middleware.

Thereby, delayed data transmission, modification-before/after-transmission and non-traceability of these data transmissions can be prevented. Moreover, by using the at least one middleware, a de-coupling of the server and the data storage device is achieved, wherein the server and the at least one middleware are both network components within a network system. This described configuration allows a storing of data outside of the server on the middleware serving as a data storage device. The need of controlling a local hardware device to store the data becomes dispensable. This redirection is made without the need for any modification of the application system running on the server.

Furthermore, the virtual file system is located in the non-persistent memory and is controlled by the core. For allowing the interfacing communication between the application system and the virtual file system on the respective server, a kernel of an operation system running on the tion system and the virtual file system on the respective server, a kernel of an operation system running on the server is modified. Therefore, a virtual file system interface for the virtual file system is implemented, which is being exposed by the operating system. The virtual file system interface can seamlessly be integrated into the operation system's kernel by providing operation system's operations for all file-related operations to the virtual file system and the core, respectively. As the core is independent of the used file system, all kinds of operation systems can be used without a need for modifying the core.

Thus, by using the virtual file system interface, the core using the virtual file system is able to interface with the application system for redirecting read- and write-calls initiated by the application system. These calls comprise information for the operation system and/or data transmissions, which are originally addressed to a persistent storage device by the application system and can now be intercepted by the core. The persistent storage device can be virtual or it can be simulated for that the application system can address the persistent storage device operation to such a persistent storage device. The persistent storage device can also be located on another server which is connected to the server and can be addressed for example via a network protocol which emulates a locale persistent storage device on the server. The core intercepts the data and redirects the data to the middleware by using the network device. Therefore, the core buffers the data which are to be transmitted in the non-persistent memory, which can be a so-called random access memory (RAM).

The network device is provided by a communication sub-system of the server. The communication sub-system further provides communication means and a respective software to control the communication means in order to allow a communication functionality of the communication sub-system.

The above mentioned scenario can be characterized as a "write"-scenario, which tackles the described problems of the state-of-the-art solutions by this direct re-routing of the persistent storage device operation. The middleware infrastructure and a support for a "read"-scenario are required in order to complete the chain of un-modifiable transmission.

Therefore, in another aspect the persistent storage device operation further comprises a read-call, wherein the read-call of the application system to the persistent storage device can be intercepted by the core using the virtual file system and transformed into a call to the middleware which then can return the data requested in the read-call to the core which can in turn transfer the received data in a read transmission to the application system via the virtual file system interface.

After having intercepted the read-call, the core looks up for an actual configuration item stored in a configuration unit for the data requested in the read-call and remotely calls the middleware over the network system using information stored in the configuration item. The configuration unit is provided by the server and is a remote-accessible storage for relevant configuration items. The configuration items can comprise so-called meta-data for example the physical address of the middleware, encryption keys as well as middleware specific information per file such as e.g. sender identifiers. The configuration unit is connected with a configuration interface allowing to remotely access the configuration unit.

As the result of the read-call the core receives the requested data. Then, the received data can be forwarded to the application system via the virtual file system interface.

For allowing the above mentioned write- and read-calls which are transformed into appropriate data transmissions, the middleware acts as a remotely accessible data storage device, which further provides synchronous or asynchronous communication means and a persistent database exclusively accessible by the middleware itself.

Therefore, the middleware being used to receive, store and send data can be a commonly known data storage unit. The only requirements to the middleware are, however, that firstly, it is able to persistently keep the transmitted data without necessarily forwarding it further to a final destination and that secondly, it provides synchronous or asynchronous communication means, allowing communication activities such as synchronous or asynchronous calls and synchronous or asynchronous data transmissions between the core and the middleware. Thirdly, the middleware is able to log the communication activities. Thus, the issue of non-traceability is overcome by the usage of such a middleware.

According to another aspect, the middleware also comprises a functionality of data transformation and a functionality of data routing. Thus, the middleware further comprises data transformation means and data routing means.

In case that the middleware only provides asynchronous communication means, synchronous operations of the virtual file system can be simulated by so-called synchronous-asynchronous bridges implemented within the core to allow the communication and the reliability of the data transmissions. Such bridges keep synchronous calls open while they send and receive asynchronous calls before they close the synchronous call.

The data, which are kept by the middleware, should not be modifiable except by the data transformation means which are only configurable and modifiable by known users. Thus, the data can be protected, wherein the data protection can be achieved, for instance, in the case that the middleware is using a database that is exclusively accessible by the middleware itself. Using such a database could restrict data operations to read and delete a database content, which is not possible for ordinary file systems from outside the middleware.

According to another aspect the transmitted data of the application system running on the server is performed in a continuous data transmission (a so-called data stream) and is buffered in the non-persistent memory by the core using the virtual file system until data transmission is flushed and data are transmitted by the core to the middleware using a discrete function call.

As middleware communication relies on structured and discrete interfaces and while the data transmissions between the application system and the virtual file system are continuous data transmissions as described above, there is a need for making the continuously transmitted data discrete in order to transmit the data as discrete function calls to the middleware. This can be achieved by buffering the continuously transmitted data intercepted by the core. The core will declare the continuously transmitted data originating from the application system to be flushed, if no new data is appended to that data in a certain time period (e.g. 200 msec.). After this period the buffer is considered to be complete and is transmitted to the middleware using the network device and sending the data in a discrete call to the middleware. During the buffering of data, the data cannot be modified, because the core itself is the only party that can access the data.

In another aspect, the transmitted data is additionally buffered on a persistent storage device cooperating with the server for allowing a retransmission in case of a communication error.

For this aspect the server further can comprise a persistent storage device. By additionally buffering the data on the persistent storage device, the write-operation being called at the virtual file system and the time-consuming network transmission can be de-coupled. This buffering on the persistent storage device can be integrated since later communication problems might lead to a loss of data if the data is not buffered.

In another aspect, the persistent storage device includes a separate area characterized by an exclusive accessibility by the core.

Therefore, the core would also be the only component that is allowed to delete the buffered data. For that sake, it is proposed to define the above mentioned separate area of the persistent storage device which is exclusively accessible by the core.

Furthermore, the data to be stored in the persistent storage device are encrypted beforehand provided that only the core can decrypt the data.

By encrypting the data before they are stored locally, a modification of the locally buffered data on the persistent storage device can be avoided. For the encryption nearly all kinds of encryption methods can be used. The only requirement is that only the core can decrypt the data.

The exclusive accessibility to the separate area of the persistent storage device can be achieved as operations from an operation system's user space on the persistent storage device are prevented in that the operation system of the server does not mount the persistent storage device and the core can be configured to use operation system level operations to access the separate area.

This means that all other applications using the persistent storage device can not see the data in the separate area with the exception of the core which uses operation system level operations to access the separate area. Thus, the data can be stored on the same physical device as the operation system's file system as an access to the separate area of the device is not possible by other means of a file system. Furthermore, a second persistent storage device which does not contain the operation system's file system can also be used, such as an additional persistent storage device of the server.

According to another aspect the core can use user space operations to store data in a buffer on the persistent storage device which is mounted by the operation system and thus, is accessible by other application systems. In this case an exclusive accessibility can be achieved by an encryption of the buffer.

In another aspect the transmission of the data to the middleware is processed using a synchronous or an asynchronous communication.

Thereby, it is possible, that after buffering the data locally, the core transmits the data to the middleware by using a discrete synchronous or asynchronous transmission to guarantee a reliable transmission.

Without using synchronous communication, additional sub-systems would be required in order to guarantee a reliable transmission by providing acknowledgment means for allowing the middleware to send acknowledgments back to the communication sub-system to confirm a successful transmission of the data. These acknowledgment means address two aspects: On the side of the core, the core needs to offer remotely accessible functionality that can be invoked by the middleware ("callback"). On the side of the middleware, the middleware needs to be capable of finding ("addressing") the callback functionality of the core. "Callback" means a data transmission that is logically related with the initial transmission (the "request") which is issued from the requestor (the request is "answered"). As the communication is physically closed between the initial transmission and the callback, the physical address of the initial sender needs to be known. Usually, the initial request carries an identifier that points to the physical point, for example the sender, which can receive the callback. To this functionality it is referred to as "addressing".

Thus, in ease of an asynchronous communication the server uses a protocol for communication which is able to asynchronously communicate acknowledgements.

In the case the synchronous or asynchronous transmission was successfully acknowledged by the receiving middleware, the core can safely discard the in-memory representation of the transmitted data and delete the buffered data in the persistent storage device as well.

In the case of a communication error, the data buffered in the persistent storage device need to be kept in order to allow for a re-transmission. Retries need to be performed in order to achieve a successful transmission. Therefore, the core reads the buffered data from the persistent storage device and starts synchronous or asynchronous communication attempts until the middleware returns a successful result. Procedures for dealing with complete and permanent outages of the middleware and/or the network infrastructure are purely organizational and, therefore, not further discussed herein.

The communication uses a protocol for communication to synchronously or asynchronously send the transmitted data and the protocol for communication is not based on physical files.

The protocol for the communication can be for example TCP/IP (Transmission Control Protocol/Internet Protocol) or UDP/IP (User Datagram Protocol/Internet Protocol).

According to another aspect, HTTPS protocol (HyperText Transfer Protocol Secure) is used for the communication using TCP/IP. The HTTPS protocol establishes a data-stream on-top of the TCP/IP protocol and describes how a request and a response can be established over a synchronous communication channel. Additionally, HTTPS provides means for authenticating communication partners and ensures encryption of the transmitted data.

However, a requirement for the protocol for sending the data is not to rely on physical files on sender side. Also other suitable protocols fulfilling the requirements are possible.

However, it is to be understood, that the synchronous or asynchronous communication is not limited to the transmission of data, resulting from a write operation. In fact, the synchronous or asynchronous communication is to be used between the core and the middleware in both directions: system calls and data transmissions in a first direction from the core to the middleware and in an opposite direction from the middleware to the core can be performed. As already mentioned above the core in conjunction with the communication sub-system can provide bridges between the synchronous communication performed by the virtual file system and the asynchronous communication performed by the middleware in the case the middleware only provides asynchronous communication.

In a possible embodiment the network system further comprises a plurality of servers of which at least a number of servers is able to access the middleware and to query stored data from the middleware. Using this configuration it is possible to transmit data from a first server (a so-called sender) to a second server (a so-called receiver) within the network system. The first server transmits the data to the middleware and the second server is able to read the data from the middleware. Thus, the system allows a data transmission without coupling both servers directly. It rather allows a de-coupling of both communicating application systems.

Both the sender and the receiver side need to share common information in order to properly store the transmitted data accordingly to the middleware. Therefore, a configuration interface is required and configuration information needs to be distributed to all participating sender and receiver systems. For this distribution the middleware used to buffer the data can be used. However, specialized channels need to be set-up. How this can be done might vary for the actual set-up of the approach and poses pure software related issues.

According to another aspect a network system is provided comprising a plurality of servers. At least a first number of servers is provided according to the server described above, wherein a non-persistent memory of the core of at least one server of the first number of servers is replicated on a respective core of at least one other server of the first number of servers.

According to another aspect the non-persistent memory of the core of the at least one server of the first number of servers is replicated on at least one other core provided by at least a second server of the first number of servers using in-memory communication.

According to another aspect the non-persistent memory of the core of the at least one server of the first number of servers is replicated on at least one other core provided by at least a second server of the first number of servers using the respective network device of the server.

According to another aspect a network system is provided comprising a plurality of servers. At least a first number of servers is provided according to the server described above, wherein data buffered on a persistent storage device of at least one server of the first number of servers is replicated on the respective storage devices of the respective servers of the first number of servers by using the network device of the server.

According to another aspect the plurality of servers can be used for a provision of a unique system of persistent storage devices for buffering the data to be transmitted to the middleware. Initially, the data are buffered on the persistent storage device of a first server. The above described local buffering of data in case of transmission errors to the middleware can be extended by using the plurality of servers. These servers replicate the data buffered on the persistent storage device of the first server by using the network interface of the respective servers and network level encryption mechanisms and buffer the data in their own persistent storage devices, respectively. Thus, the servers can attempt to communicate the replicated data buffered on their respective persistent storage devices to the middleware. The coordination of the involved servers needs to be performed by an application-specific replication protocol. By employing more than one server, the load and the risk of unavailability can be shared and therefore minimized. Thus, in more large scale applications, problems arising just by the amount of transmissions can be addressed this way.

According to another aspect, the application system can either be running locally on a first server providing the virtual file system located in a non-persistent memory or on a second server within the network system being connected to the first server via an encrypted network tunnel. The second server and its application system might access the virtual file system of the first server. Thus, the second server does not have to provide a virtual file system by itself. The local file system of the second server accesses the virtual file system of the first server and communicates by memory internal communication (a so-called in-memory communication) with the core. The core further proceeds according to the communication originating from the application system running locally on the first server as described above.

According to another aspect the above described core can be used as a so-called de-centralized core which can be connected to a centralized core via an asynchronous and reliable communication mechanism that can use for example the JMS (Java Message Service) protocol for communication with the centralized core. The centralized core allows for replication if multiple de-central cores are used by using a plurality of servers, wherein each server provides at least one de-centralized core. This ensures high availability, failure tolerance and can also accelerate the described processing within the network system.

The described configuration of the network system providing a plurality of servers providing multiple de-centralized cores describes a so-called "distributed scenario". Each server with a de-central core has its own core that interfaces with the virtual file system of the first server. Thus, functionalities such as buffering and replicating of data on another server can be provided. The central core is able to get the data from the de-central cores in order to transfer it to the middleware. The scenario could also be realized using only one core that addresses all the functionalities as one entity. However, the distributed configuration is described as it is useful in large-scale applications, since it allows for failure tolerance and load balancing.

According to another aspect, in the "write"-scenario the discrete data is for example picked-up by the centralized core from a queue, which is acting as a buffer buffering the data, and transferred to an enterprise java bean (EJB) which is part of the communication sub-system. In a "read"-scenario the centralized core picks up the information about the file to be read from the queue and provides the information to the EJB, which forwards the request further inside the communication sub-system. The EJB then forwards calls to a web service proxy which comprises the network device and which enables the use of protocols for communication, such as HTTPS and SOAP (Simple Object Access Protocol). The web service proxy is a local functional module that exposes the functionality of sending data to the middleware. For the calling application system, it behaves like a local program, but internally it can access the network device in order to transfer the data. This way the data ("write"-scenario) or the information about the file to be read ("read"-scenario) are transmitted to the middleware. In order to determine the network location of the middleware but also in order to deliver the data together with appropriate meta-data, the communication sub-system utilizes the configuration unit into which administrators can write configuration data via a configuration interface.

In the "write"-scenario the middleware takes over the call from the communication sub-system and communicates the data further to the configured receiver(s) that are determined using the transmitted meta-data. A receiver could also be a storage within the middleware that keeps data available for an access from a virtual file system or the core that is used in a "read"-scenario.

In the "read"-scenario the communication sub-system delivers back the content of the requested file that it receives via the web service proxy from the middleware. The data is then put into the queue and is delivered back to the de-centralized core. The de-centralized core then sends the data back to the local or remote application system via the core using the virtual file-system.

According to another aspect, the server further comprises a timer. If the application system is sending out data in a write scenario a flush call is sent from the application system after the data transmission is completed to close the sent file and to allow further transmission of the file. The flush call is sent to the core, which directs the flush call to the timer in order to initialize the timer activation. The timer is necessary as it is not mandatory that the application system will explicitly close the file by issuing a close command. As the flush call by itself is also not a reliable signal that the write process is finished, the timer activation is initialized for the case of a missing flush call to continue the data transmission. If the flush call is missing, the timer will initiate further transmission.

The approach is to de-couple the file system operations as they are exposed to the various application systems and the device driver that hardware-specifically utilizes the controller of the persistent storage device (e.g. the hard disc). Instead, the idea is to redirect the high-level operations and utilizes a separate middleware as a remotely accessible data storage instead of controlling a hardware device to store the data.

The described approach is different form network enabled file systems (NFS). This is because NFS solely moves the place of physical storage from a local to a remote system, but does not eliminate the possibility to manipulate the data and does not de-couple the sender, the intermediate system and the receiver. The described implementation does so. However, the proposed approach might be combined with a NFS. This introduces the benefit of not necessarily manipulating the sender and/or receiver system as most operating systems are natively able to access remote data file systems. In order to combine these approaches, a manipulated system that redirects file-accesses according to the described approach might expose the manipulated storage area by means of a NFS.

The described approach has the effect that the data that an application "considers" to be written to a file can be instantly transmitted to a middleware. This way the data are reliably transmitted without coupling the writing application system with the receiving application system while still allowing for a communication semantics of "exactly-once" ("fire and forget").

Another effect is that data cannot be modified during their transmission. This is because the data cannot be modified while they are buffered, because the core using the virtual file system itself is the only party that can access the data. Other approaches restrict the possible modifiers to certain user accounts, which still involve several parties and reduce the time data are modifiable while the disclosed approach brings this time to zero.

The server disclosed above corresponds to a network component such as a network client, a network server or any suitable network device within a network system able to perform the disclosed tasks and functionalities.

The description further provides a method utilizing the above specified server and the above specified network system for securely redirecting a persistent storage device operation to a middleware infrastructure. It is to be understood that the method is also intended to utilize each of the provided embodiments of the server disclosed above without departing from the scope of the description.

Furthermore, a computer program product is provided with a computer-readable medium and a computer program stored on the computer-readable medium with a program code which is suitable for carrying out a method as described above when the computer program is run on a computer.

Furthermore, a computer program is provided comprising a program code which is suitable for carrying out a method as described above when the computer program is run on a computer.

Furthermore, a computer-readable medium is provided with a computer program stored thereon, the computer program comprising a program code which is suitable for carrying out a method as described above when the computer program is run on a computer.

**Brief description of the drawings**

Figure 1 is a block diagram showing a possible implementation of a server comprising a virtual file system and a core and being coupled to a middleware.

Figure 2 is a block diagram showing a general set-up of a server comprising a virtual file system in a distributed scenario and being coupled to a middleware.

Figure 3 is a sequence diagram showing a sequence of operations of a write access.

Figure 4 is a sequence diagram showing a sequence of operations of a read access.

Figure 5 is a flow diagram showing the workflow of a write access.

Figure 6 is a flow diagram showing the workflow of a read access.

**Detailed Description**

In the following description of the drawings the same reference numbers are marking throughout all following drawings the same objects, devices or processing steps.

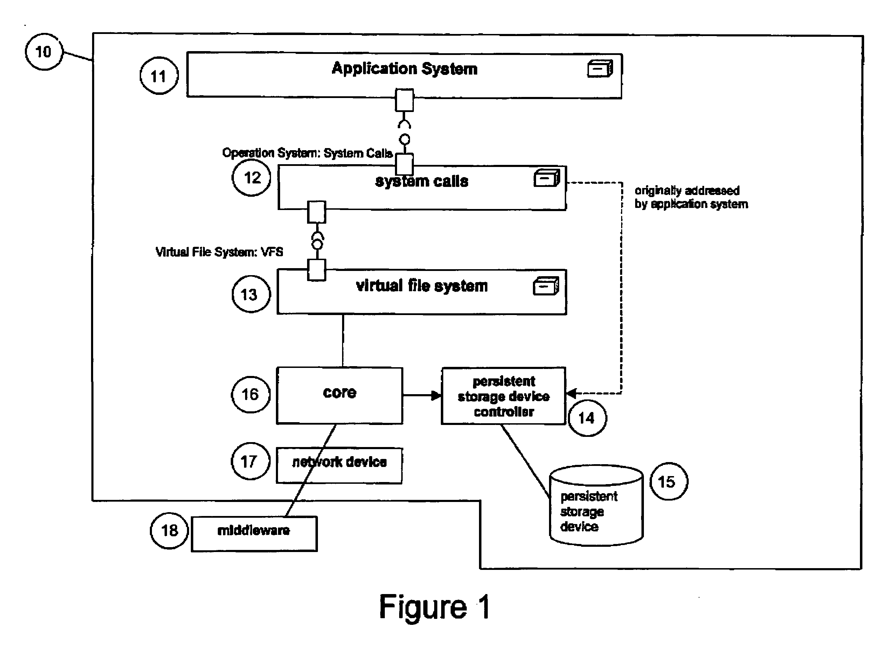

Figure 1 shows the principle of the disclosed approach. A server 10 comprises an application system 11 running on the server 10, a core 16, a virtual file system 13 located in a non-persistent memory, optionally a persistent storage device 15, an appropriate persistent storage device controller 14 and a network device 17. Furthermore, the server 10 is communicating with a middleware 18 located within a network system comprising at least the middleware 18 and the server 10.

The application system 11 located in a user space program library of the server 10 is sending out a system call 12, which is originally addressed to the controller of the persistent storage device 14 (as shown in phantom). Such a system call 12 can comprise a data transmission. The core 16 is able to intercept the system call 12 by using the virtual file system 13, and to buffer the data to be transmitted in the non-persistent memory. The core 16 also manages the non-persistent memory and directs the buffered data to be transmitted to the middleware 18 located within the network system by using the network device 17 of the server 10. Optionally, the core 16 is sending the buffered data to the persistent storage device controller 14, which initiates the storing of data on the persistent storage device 15.

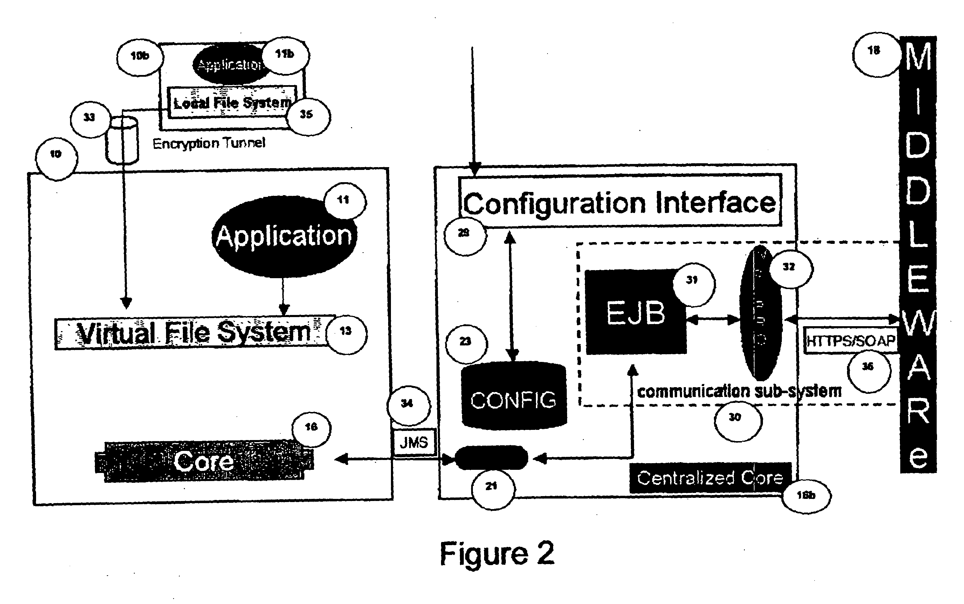

Figure 2 shows a general set-up of a server comprising a virtual file system in a distributed scenario and being coupled to a middleware. The programming part is exemplified herein by the use of java programming language and web service as an application level transport protocol. A first server 10 is provided with an application system 11 running on the first server 10, a core 16 and a virtual file system 13. The application system 11 can either be running locally on the first server 10 providing the virtual file system 13 located in a non-persistent memory or on a second server 10b within a network system being connected to the first server 10 via an encryption tunnel 33. The second server 10b and its application system 11b can access the virtual file system 13 of the first server 10. Thus, the second server 10b does not have to provide a virtual file system by itself. The local file system 35 of the second server accesses the virtual file system 13 of the first server 10 and communicates by in-memory communication with the core 16. The core 16 can be used as a so-called de-centralized core 16 which is connected to a centralized core 16b via an asynchronous and reliable communication mechanism that can use for example the JMS (Java Message Service) protocol 34 for communication with the centralized core 16b. The centralized core 16b allows for replication if multiple de-centralized cores 16 are used by using a plurality of servers, wherein each server provides at least one de-centralized core 16. The centralized core 16b gets the data from the de-centralized core 16 in order to transfer the data to the middleware 18. The data are picked-up by the centralized core 16b from a queue 21 (in the "write"-scenario) and provided to an enterprise java bean (EJB) 31 which is part of a communication sub-system 30. In a "read"-scenario the centralized core 16b picks up the information about the file to be read from the queue and provides the information to the EJB, which forwards the request further inside the communication sub-system 30. The EJB 31 then forwards calls by itself to a web service proxy 32 that comprises a network device (not shown) and enables the use of HTTPS/SOAP protocols 36 for communication with the middleware 18 to transmit the data ("write"-scenario) or the information about the file to be read ("read"-scenario) to the middleware. In order to determine the network location of the middleware 18 but also in order to deliver the data together with appropriate meta-data, the communication sub-system 30 utilizes a configuration unit 23 into which administrators can write configuration data via a configuration interface 29.

In the "write"-scenario the middleware 18 takes over the call from the communication sub-system 30 and communicates the data further to the configured receiver(s) that are determined using the transmitted meta-data. A receiver can be a server 10 or a storage within the middleware (not shown) that keeps data available for the access from a virtual file system 13 or the core 16 that is used in a "read"-scenario.

In the "read"-scenario the communication sub-system 30 delivers back the content of the requested file that it receives via the web service proxy 32 from the middleware 18. The data is then put into the queue 21 and is delivered back to the de-centralized core 16. The de-centralized core 16 then sends the data back to the local or remote application system 11 or 11b by using the virtual file system 13.

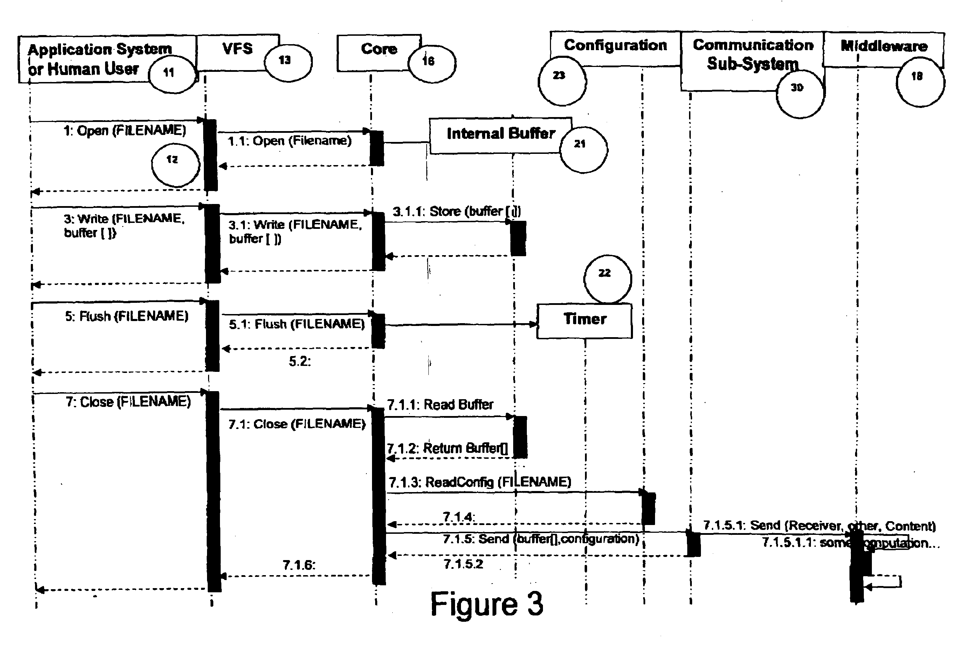

Figure 3 is showing the sequence of operations of a write-access within a "write"-scenario. In step 1 the application system 11 is sending out a system call 12 for opening a file A. The system call 12 is redirected to the virtual file system 13, which directs the system call 12 in step 1.1 to the core 16, which prepares an internal buffer 21 for new file A. In the following step 3 the content of file A is transferred in a data transmission stream from the application system 11 to the virtual file system 13, which directs the data transmission stream to the core 16 (3.1), which in turn directs the data transmission stream further to the buffer for buffering the data (3.1.1). In step 5 a flush call is sent from the application system 11 to the virtual file system 13, which directs the flush call to the core 16 (5.1), which directs the flush call to a timer 22 in order to activate the timer. The success of the flush operation is then announced to the core (5.2). In step 7 a system call 12 for closing the data transmission stream is sent to the virtual file system 13, which directs the system call to the core 16 (7.1). Thereupon, the core 16 reads out the buffered data in the buffer (step 7.1.1 and 7.1.2) and reads configuration items from a configuration unit 23 containing meta-data. After receiving the data and the configuration items the core 16 sends both in a single call to a communication sub-system 30 (step 7.1.5). From communication sub-system 30 the single call is directed to the middleware 18 (step 7.1.5.1), where it might be processed before storing in the middleware 18 (step 7.1.5.1.1).

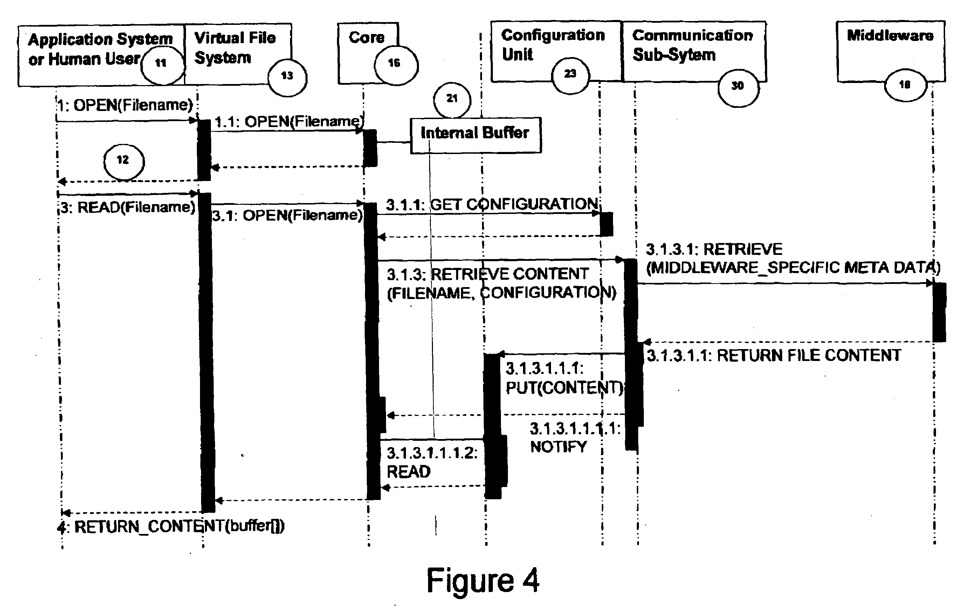

Figure 4 is showing the sequence of operations of a read-access. In step 1 the application system 11 is sending out a system call 12 for opening a file A. The system call 12 is redirected to the virtual file system 13, which directs the system call 12 in step 1.1 to core 16, which prepares an internal buffer 21 for the content of the file A which will be opened. In the following step 3 the application system 11 sends a system call to request the content of the file A. This call is redirected to the virtual file system 13, which directs the data request to the core 16. The core 16 retrieves meta-data about the requested file from the configuration unit 23 in step 3.1.1 and utilizes subsequently the meta-data in order to call the communication sub-system 30 in step 3.1.3. Using the meta-data the communication sub-system 30 communicates over the network with the middleware 18 in step 3.1.3.1. In step 3.1.3.1.1 the middleware 18 then provides the communication sub-system 30 with the requested data from the file A. The communication sub-system 30 then stores this data into the previously initialized internal buffer 21 in step 3.1.3.1.1.1 and notifies the core 16 about the arrival of the new data in step 3.1.3.1.1.1.1. The core 16 reads out the data from the buffer in step 3.1.3.1.1.1.2. In step 4 the core 16 returns the data stored inside the internal buffer 21 to the application system 11 using the stream opened by the read system call 12 in step 3.

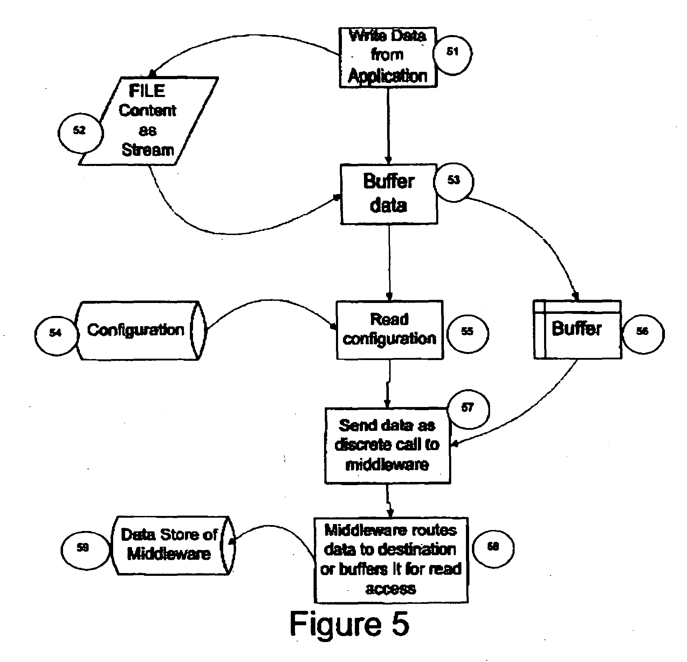

Figure 5 is showing a simplified flow diagram of a write-access and a subset of the information from figure 3. First, in step 51 an application system is writing out data. In step 52 the data are sent as a stream to the core for buffering the data. In step 53 the core forwards the data to the internal buffer for buffering. In step 56 the data are buffered within this internal buffer. After configuration items are received from the configuration unit in step 54, the configuration items containing meta-data are read in step 55. The data are sent from the buffer to the middleware in a discrete function call in step 57 using the meta-data from the configuration items. The middleware receives the data and routes the data to a destination or buffers the data locally and un-modifiable for a future read access (step 58) by sending the data to the data storage of the middleware. In step 59 the data are stored in the data storage of the middleware. Afterwards, the data could be read out from the middleware by a read call or the data could be transferred to another application system without using a virtual file system, wherein these later steps are not shown.

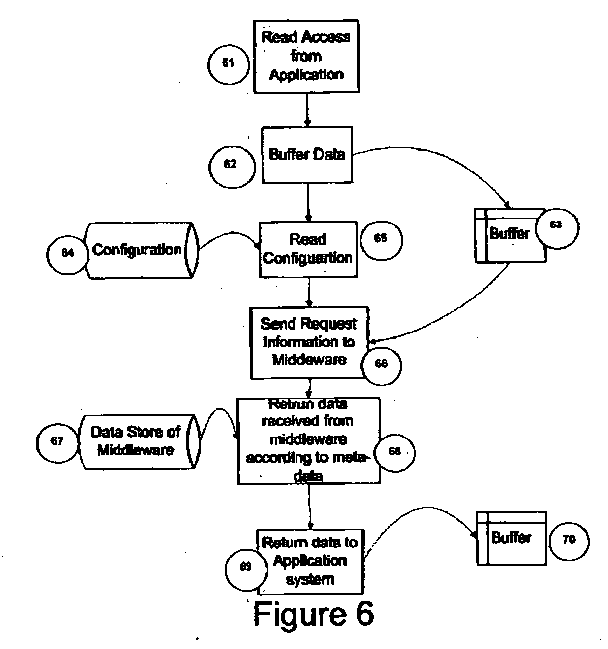

Figure 6 is showing a simplified flow diagram of a read-access and a subset of the information from figure 4. An application system is sending out a system call for a read-access for opening a file in step 61 which is intercepted by the core. In step 62 the core initialises the preparation of an internal buffer. In step 63 the internal buffer is prepared for the content of the requested file and in step 65 the core reads the configuration items for the requested file from the configuration unit 64. The request for the file is sent further to the middleware in step 66 by using meta-data provided by the configuration items. The data of the requested file are read from the data storage of the middleware (step 67) and are returned according to the meta-data to the core (step 68). The data are returned to the application system (step 69) by buffering the data to the buffer in step 70 before they are sent to the application system in a transmission stream (not shown).

## Claims

1. A server (10) comprising a virtual file system (13) and a core (16) for redirecting a persistent storage device operation to a middleware dinfrastructure, wherein the persistent storage device operation comprises at least a transmission of data resulting from a write operation of an application system running on the server, wherein the server (10) further comprises at least one network device (17) and at least one physical non-persistent memory, and the server (10) is cooperating with at least one middleware (18) acting as a data storage remotely accessible and further comprising data transformation means and data routing means, wherein the virtual file system (13) is located in the non-persistent memory and the server is adapted to redirect data of a write transmission addressed to a persistent storage device (15) via the virtual file system (13) to the core (16) for buffering the data in the non-persistent memory, wherein the non-persistent memory is managed by the core (16), which is further configured to intercept the data which are to be buffered in the non-persistent memory and which is the only component which can access the buffered data prior to its transmission to the middleware, thus preventing a modification of the data during the buffering, the core further adapted to transmit the data to the middleware (18) using the network device (17) when the buffering is considered to be complete, wherein the transmitted data of the application system (11) running on the server (10) are transmitted via a continuous data transmission stream and buffered in the non-persistent memory by the core (16) using the virtual file system (13) until data transmission is flushed and data are transmitted by the core (16) to the middleware (18) using a discrete function call, wherein the core is configured to declare the continuously transmitted data originating from the application system to be flushed, if no new data is appended to that data in a certain time period.

2. The server (10) according to claim 1, wherein the core is adapted to intercept a read-call (12) of the application system (11) to the persistent storage device (15) (16) and to transform it into a call to the middleware (18) which is meant to return the data requested in the read-call (12) to the core (16) which in turn is adapted to transfer the received data in a read transmission to the application system (11) via an virtual file system interface.

3. The server (10) according to claim 1 or 2, wherein the middleware (18) is adapted to act as a remotely accessible data storage device, further including communication means and a persistent database exclusively accessible by the middleware (18) itself.

4. A network system comprising a plurality of servers, wherein at least a first number of servers is provided according to any one of claims 1 to 3, wherein a non-persistent memory of the core of at least one server of the first number of servers is replicated on a respective core of at least one other server of the first number of servers.

5. A method comprising usage of a virtual file system and a core for securely redirecting a persistent storage device operation to a middleware infrastructure, wherein the persistent storage device operation comprises at least a transmission of data resulting from a write operation of an application system running on the server, the data being addressed to a persistent storage device, wherein the server further comprises at least one network device and at least one physical non-persistent memory, and the server is cooperating with at least one middleware, which is acting as a data storage remotely accessible and further comprising data transformation means and data routing means, wherein the virtual file system is located in the non-persistent memory, and the data of the write transmission addressed to the persistent storage device is redirected via the virtual file system to the core for buffering the data in the non-persistent memory, wherein the non-persistent memory is managed by the core, which is the only component which can access the buffered data prior to its transmission to the middleware, thus preventing a modification of the data during the buffering, the core further performing the steps of intercepting the data which are to be buffered and transmitting the data buffered in the non-persistent memory to the middleware using the network device when the buffering is considered to be complete, wherein the transmitted data of the application system running on the server are transmitted via a continuous data transmission stream and buffered in the non-persistent memory by the core using the virtual file system until data transmission is flushed and data are transmitted by the core to the middleware using a discrete function call, wherein the core declares the continuously transmitted data originating from the application system to be flushed, if no new data is appended to that data in a certain time period.

6. The method of claim 5, wherein a read-call of the application system to the persistent storage device is intercepted by the core and transformed into a call to the middleware which returns the data requested in the read-call to the core which in turn transfers the received data in a read transmission to the application system via a virtual file system interface.

7. The method according to claim 5 or 6, wherein the middleware acts as a remotely accessible data storage device, further including communication means and a persistent database exclusively accessible by the middleware itself.

8. A method according to any one of claims 5 to 7, comprising usage of a network system according to claim 4, wherein a non-persistent memory of the core of at least one server of the first number of servers is replicated on a respective core of at least one other server of the first number of servers.

9. A computer program product with a computer-readable medium and a computer program stored on the computer-readable medium with a program code which is suitable for carrying out a method according to any one of claims 5 to 8 when the computer program is run on a computer.

10. A computer program with a program code which is suitable for carrying out a method according to any one of claims 5 to 8 when the computer program is run on a computer.

11. A computer-readable medium with a computer program stored thereon, the computer program comprising a program code which is suitable for carrying out a method according to any one of claims 5 to 8 when the computer program is run on a computer.

**Patentansprüche**

1. Server (10) mit einem virtuellen Dateisystem (13) und einem Kern (16) zum Umleiten eines Dauerspeichervorrichtungsvorgangs zu einer Middleware-Infrastruktur, wobei der Dauerspeichervorrichtungsvorgang mindestens eine Übertragung von Daten, die sich aus einem Schreibvorgang eines auf dem Server laufenden Anwendungssystems ergeben, aufweist, wobei der Server (10) des Weiteren mindestens eine Netzwerkvorrichtung (17) und mindestens einen physikalischen flüchtigen Speicher aufweist und der Server (10) mit mindestens einer Middleware (18) zusammenarbeitet, die als ein aus der Ferne zugänglicher Datenspeicher wirkt, und des Weiteren Datentransformationsmittel und Datenleitmittel aufweist, wobei sich das virtuelle Dateisystem (13) in dem flüchtigen Speicher befindet und der Server dafür eingerichtet ist, Daten einer an eine Dauerspeichervorrichtung (15) adressierten Schreibübertragung über das virtuelle Dateisystem (13) zum Kern (16) umzuleiten, um die Daten in dem flüchtigen Speicher zu puffern, wobei der flüchtige Speicher durch den Kern (16) verwaltet wird, der des Weiteren dafür konfiguriert ist, die Daten, die in dem flüchtigen Speicher zu puffern sind, abzufangen, und der die einzige Komponente ist, die auf die gepufferten Daten zugreifen kann, bevor sie zur Middleware übertragen werden, so dass eine Modifikation der Daten während des Pufferns verhindert wird, wobei der Kern ferner dafür eingerichtet ist, die Daten unter Verwendung der Netzwerkvorrichtung (17) zur Middleware (18) zu übertragen, wenn davon ausgegangen wird, dass das Puffern abgeschlossen ist, wobei die übertragenen Daten des auf dem Server (10) laufenden Anwendungssystems (11) über einen kontinuierlichen Datenübertragungs-Stream übertragen und unter Verwendung des virtuellen Dateisystems (13) durch den Kern (16) in dem flüchtigen Speicher gepuffert werden, bis die Datenübertragung gelöscht wird und Daten unter Verwendung eines diskreten Funktionsaufrufs durch den Kern (16) zur Middleware (18) übertragen werden, wobei der Kern konfiguriert ist zu erklären, dass die von dem Anwendungssystem ausgehenden kontinuierlich übertragenen Daten zu löschen sind, wenn an diese Daten in einem bestimmten Zeitraum keine neuen Daten angehängt werden.

2. Server (10) nach Anspruch 1, wobei der Kern dafür eingerichtet ist, einen Leseaufruf (12) des Anwendungssystems (11) zur Dauerspeichervorrichtung (15) abzufangen und ihn in einen Aufruf für die Middleware (18) umzuwandeln, welche die in dem Leseaufruf (12) angeforderten Daten zum Kern (16) zurückführen soll, welcher wiederum dafür eingerichtet ist, die in einer Leseübertragung empfangenen Daten über eine Schnittstelle des virtuellen Dateisystems zum Anwendungssystem (11) zu übertragen.

3. Server (10) nach Anspruch 1 oder 2, wobei die Middleware (18) dafür eingerichtet ist, als eine aus der Ferne zugängliche Datenspeichervorrichtung zu wirken und des Weiteren Kommunikationsmittel und eine permanente Datenbank, die ausschließlich für die Middleware (18) selbst zugänglich ist, aufweist.

4. Netzwerksystem mit einer Mehrzahl von Servern, wobei mindestens eine erste Anzahl von Servern nach einem der Ansprüche 1 bis 3 bereitgestellt ist, wobei ein flüchtiger Speicher des Kerns von mindestens einem Server aus der ersten Anzahl von Servern auf einem jeweiligen Kern von mindestens einem anderen Server aus der ersten Anzahl von Servern repliziert ist.

5. Verfahren, bei dem ein virtuelles Dateisystem und ein Kern zum sicheren Umleiten eines Dauerspeichervorrichtungsvorgangs zu einer Middleware-Infrastruktur verwendet werden, wobei der Dauerspeichervorrichtungsvorgang mindestens eine Übertragung von Daten, die sich aus einem Schreibvorgang eines auf dem Server laufenden Anwendungssystems ergeben, aufweist, wobei die Daten an eine Dauerspeichervorrichtung adressiert werden, wobei der Server des Weiteren mindestens eine Netzwerkvorrichtung und mindestens einen physikalischen flüchtigen Speicher aufweist und der Server mit mindestens einer Middleware zusammenarbeitet, die als ein aus der Ferne zugänglicher Datenspeicher wirkt, und des Weiteren Datentransformationsmittel und Datenleitmittel aufweist, wobei sich das virtuelle Dateisystem in dem flüchtigen Speicher befindet und die Daten der an die Dauerspeichervorrichtung adressierten Schreibübertragung über das virtuelle Dateisystem zu dem Kern zum Puffern der Daten im flüchtigen Speicher umgelenkt werden, wobei der flüchtige Speicher durch den Kern verwaltet wird, der die einzige Komponente ist, die auf die gepufferten Daten zugreifen kann, bevor sie zur Middleware übertragen werden, so dass eine Modifikation der Daten während des Pufferns verhindert wird, wobei der Kern des Weiteren die folgenden Schritte ausführt: Abfangen der Daten, die zu puffern sind, und Übertragen der im flüchtigen Speicher gepufferten Daten zu der Middleware unter Verwendung der Netzwerkvorrichtung, wenn das Puffern als abgeschlossen angesehen wird, wobei die übertragenen Daten des auf dem Server laufenden Anwendungssystems über einen kontinuierlichen Datenübertragungs-Stream übertragen und unter Verwendung des virtuellen Dateisystems durch den Kern in dem flüchtigen Speicher gepuffert werden, bis die Datenübertragung gelöscht wird und Daten unter Verwendung eines diskreten Funktionsaufrufs durch den Kern zur Middleware übertragen werden, wobei der Kern erklärt, dass die von dem Anwendungssystem ausgehenden kontinuierlich übertragenen Daten zu räumen sind, wenn an diese Daten in einem bestimmten Zeitraum keine neuen Daten angehängt werden.

6. Verfahren nach Anspruch 5, bei dem ein Leseaufruf des Anwendungssystems zur Dauerspeichervorrichtung durch den Kern abgefangen wird und in einen Aufruf für die Middleware umgewandelt wird, welche die im Leseaufruf angeforderten Daten zum Kern zurückführt, der wiederum die in einer Leseübertragung empfangenen Daten über eine Schnittstelle des virtuellen Dateisystems zum Anwendungssystem überträgt.

7. Verfahren nach Anspruch 5 oder 6, bei dem die Middleware als eine aus der Ferne zugängliche Datenspeichervorrichtung wirkt und des Weiteren Kommunikationsmittel und eine permanente Datenbank, die ausschließlich für die Middleware selbst zugänglich ist, aufweist.

8. Verfahren nach einem der Ansprüche 5 bis 7, bei dem ein Netzwerksystem nach Anspruch 4 verwendet wird, wobei ein flüchtiger Speicher des Kerns von mindestens einem Server aus der ersten Anzahl von Servern auf einem jeweiligen Kern von mindestens einem anderen Server aus der ersten Anzahl von Servern repliziert wird.

9. Computerprogrammprodukt mit einem computerlesbaren Medium und einem auf dem computerlesbaren Medium gespeicherten Computerprogramm mit einem Programmcode, der geeignet ist, ein Verfahren nach einem der Ansprüche 5 bis 8 auszuführen, wenn das Computerprogramm auf einem Computer ausgeführt wird.

10. Computerprogramm mit einem Programmcode, der geeignet ist, ein Verfahren nach einem der Ansprüche 5 bis 8 auszuführen, wenn das Computerprogramm auf einem Computer ausgeführt wird.

11. Computerlesbares Medium mit einem darauf gespeicherten Computerprogramm, wobei das Computerprogramm einen Programmcode aufweist, der geeignet ist, ein Verfahren nach einem der Ansprüche 5 bis 8 auszuführen, wenn das Computerprogramm auf einem Computer ausgeführt wird.

**Revendications**

1. Serveur (10) comprenant un système de fichier virtuel (13) et un noyau (16) pour rediriger une fonction d'un dispositif de stockage persistant vers une infrastructure intergicielle, dans lequel la fonction du dispositif de stockage persistant comprend au moins une transmission de données résultant d'une application d'écriture d'un système d'application en fonctionnement sur le serveur, dans lequel le serveur (10) comprend encore au moins un dispositif réseau (17) et au moins une mémoire physique non persistante, et le serveur (10) coopère avec au moins un intergiciel (18) faisant office de stockage de données accessible à distance et comprenant en outre des moyens de transformation de données et des moyens de routage de données, dans lequel le système de fichier virtuel (13) est localisé dans la mémoire non persistante et le serveur est adapté à rediriger des données d'une transmission d'écriture adressée à un dispositif de stockage persistant (15) via le système de fichier virtuel (13) vers le noyau (16) pour mettre en tampon les données dans la mémoire non persistante, ladite mémoire non persistante étant gérée par le noyau (16), lequel est en outre configuré pour intercepter les données qui doivent être mises en tampon dans la mémoire non persistante et qui est le seul composant qui soit capable d'accéder aux données mises en tampon avant leur transmission à l'intergiciel, empêchant ainsi une modification des données pendant la mise en tampon, le noyau étant en outre adapté à transmettre les données à l'intergiciel (18) en utilisant le dispositif réseau (17) lorsque la mise en tampon est considérée comme terminée, dans lequel les données transmises du système d'application (11) en fonctionnement sur le serveur (10) sont transmises via un flux de transmission de données continu et mises en tampon dans la mémoire non persistante par le noyau (16) en utilisant le système de fichier virtuel (13) jusqu'à ce que la transmission de données soit purgée et que les données soient transmises par le noyau (16) à l'intergiciel (18) en utilisant un appel de fonction discret, dans lequel le noyau est configuré pour déclarer les données transmises en continu provenant du système d'application à purger, si aucune nouvelle donnée n'est attachée à ces données dans une certaine période temporelle.

2. Serveur (10) selon la revendication 1, dans lequel le noyau est adapté à intercepter un appel de lecture (12) du système d'application (11) au dispositif de stockage persistant (15) et à le transformer en un appel à l'intergiciel qui a pour vocation de retourner des données requises dans l'appel de lecture (12) vers le noyau (16) qui est à son tour adapté à transférer les données reçues dans une transmission de lecture au système d'application (11) via une interface du système de fichier virtuel.

3. Serveur (10) selon la revendication 1 ou 2, dans lequel l'intergiciel (18) est adapté pour agir comme un dispositif de stockage de données accessible à distance, en incluant en outre des moyens de communication et une base de données persistante exclusivement accessible par l'intergiciel lui-même (18).

4. Système réseau comprenant une pluralité de serveurs, dans lequel au moins un premier nombre de serveurs est prévu en accord avec l'une quelconque des revendications 1 à 3, dans lequel une mémoire non persistante du noyau d'au moins un serveur du premier nombre de serveurs est répliquée sur un noyau respectif d'au moins un autre serveur du premier nombre de serveurs.

5. Procédé comprenant l'usage d'un système de fichier virtuel et d'un noyau pour rediriger de façon sécurisée une fonction d'un dispositif de stockage persistant vers une infrastructure intergicielle, dans lequel la fonction du dispositif de stockage persistant comprend au moins une transmission de données résultant d'une application d'écriture d'un système d'application en fonctionnement sur le serveur, les données étant adressées à un dispositif de stockage persistant, dans lequel le serveur comprend en outre au moins un dispositif réseau et au moins une mémoire physique non persistante, et le serveur coopère avec au moins un intergiciel, qui fait office de stockage de données accessible à distance et qui comprend en outre des moyens de transformation de données et des moyens de routage de données, dans lequel le système de fichier virtuel est localisé dans la mémoire non persistante, et les données de la transmission d'écriture adressées au dispositif de stockage persistant sont redirigées via le système de fichier virtuel vers le noyau pour mettre en tampon les données dans la mémoire non persistante, dans lequel la mémoire non persistante est gérée par le noyau qui est le seul composant qui soit capable d'accéder aux données mises en tampon avant leur transmission à l'intergiciel, empêchant ainsi une modification des données pendant la mise en tampon, le noyau exécutant en outre les étapes consistant à intercepter les données qui doivent être mises en tampon et à transmettre les données mises en tampon dans la mémoire non persistante vers l'intergiciel en utilisant le dispositif réseau quand la mise en tampon est considérée comme terminée, dans lequel les données transmises du système d'application en fonctionnement sur le serveur sont transmises via un flux de transmission de données continu et mises en tampon dans la mémoire non persistante par le noyau en utilisant le système de fichier virtuel jusqu'à ce que la transmission de données soit purgée et que les données soient transmises par le noyau à l'intergiciel en utilisant un appel de fonction discret, dans lequel le noyau déclare les données transmises en continu provenant du système d'application à purger, si aucune nouvelle donnée n'est attachée à ces données dans une certaine période temporelle.

6. Procédé selon la revendication 5, dans lequel un appel de lecture du système d'application au dispositif de stockage persistant est intercepté par le noyau et transformé en un appel à l'intergiciel qui renvoie les données requises dans l'appel de lecture vers le noyau qui transfère à son tour les données reçues dans une transmission de lecture au système d'application via une interface du système de fichier virtuel.

7. Procédé selon la revendication 5 ou 6, dans lequel l'intergiciel fait office de dispositif de stockage de données accessible à distance, incluant en outre des moyens de communication et une base de données persistante exclusivement accessible par l'intergiciel lui-même.

8. Procédé selon l'une quelconque des revendications 5 à 7, comprenant l'utilisation d'un système réseau selon la revendication 4, dans lequel une mémoire non persistante du noyau d'au moins un serveur du premier nombre de serveurs est répliquée sur un noyau respectif d'au moins un autre serveur du premier nombre de serveurs.

9. Produit de programme d'ordinateur avec un support lisible à l'ordinateur et un programme d'ordinateur stocké sur le support lisible à l'ordinateur avec un code de programme qui convient pour mettre en oeuvre un procédé selon l'une quelconque des revendications 5 à 8 quand le programme d'ordinateur est exécuté sur un ordinateur.

10. Programme d'ordinateur avec un code de programme qui convient pour mettre en oeuvre un procédé selon l'une quelconque des revendications 5 à 8 quand le programme d'ordinateur est exécuté sur un ordinateur.

11. Support lisible à l'ordinateur avec un programme d'ordinateur stocké sur lui-même, le programme d'ordinateur comprenant un code de programme qui convient pour mettre en oeuvre un procédé selon l'une quelconque des revendications 5 à 8 quand le programme d'ordinateur est exécuté sur un ordinateur.

Figure 1

Application System

**11**

**12** Operation System: System Calls

system calls

originally addressed
by application system

**13** Virtual File System: VFS

virtual file system

**16** core

**14** persistent
storage device
controller

**17** network device

**18** middleware

**15** persistent
storage
device

**10**

EP 1 988 473 B1

15

Figure 2

Figure 3

Figure 4

EP 1 988 473 B1

Figure 5

EP 1 988 473 B1

```
          ┌──────────────┐
     ⑤¹   │  Read Access  │
          │     from      │
          │  Application  │
          └──────────────┘
                 │
                 ▼
          ┌──────────────┐
     ⑥²   │  Buffer Data  │──────────────┐
          └──────────────┘               │
                 │                        ▼
                 ▼                  ┌──────────┐
 ┌────────────┐ ┌──────────────┐   │ Buffer ⑥³│
 │Configuration│ │    Read      │   └──────────┘
⑥⁴└────────────┘ │ Configuartion│⑥⁵     │
                 └──────────────┘        │
                        │                │
                        ▼                │
                 ┌──────────────┐        │
                 │ Send Request │◀───────┘
                 │ Information to│
                 │  Middeware   │⑥⁶
                 └──────────────┘
                        │
                        ▼
 ┌────────────┐  ┌──────────────┐
 │Data Store of│ │ Return data  │
⑥⁷│ Middleware │ │ received from │
 └────────────┘  │  middleware  │⑥⁸
                 │according to meta-│
                 │     data     │
                 └──────────────┘
                        │
                        ▼
                 ┌──────────────┐
                 │Return data to│      ┌──────────┐
              ⑥⁹ │  Application  │──────│ Buffer ⑦⁰│
                 │    system    │      └──────────┘
                 └──────────────┘
```

# Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030110188 A1